# EUROPÄISCHE PATENTSCHRIFT

(11) **EP 3 665 076 B1**
(45) Veröffentlichungstag und Bekanntmachung des Hinweises auf die Patenterteilung: **29.12.2021**
(21) Anmeldenummer: 18749754.0
(22) Anmeldetag: 27.07.2018
(51) Int. Cl.: B64C 39/02

(54) **SCHWEBEFLUGFÄHIGES LUFTFAHRZEUG**
HOVERING AIRCRAFT
AVION CAPABLE DE VOL STATIONNAIRE

(30) Priorität: 11.08.2017 DE 102017118335
(43) Veröffentlichungstag der Anmeldung: 17.06.2020
(73) Patentinhaber: Airbus Defence and Space GmbH, 82024 Taufkirchen (DE)
(72) Erfinder: NEUBERT, Nick, 21129 Hamburg (DE); BLASK, Malte, 21129 Hamburg (DE); HAGENS, Hagen-Christian, 21129 Hamburg (DE)
(74) Vertreter: LKGLOBAL Lorenz & Kopf PartG mbB Patentanwälte
(86) Internationale Anmeldenummer: PCT/EP2018/070421
(87) Internationale Veröffentlichungsnummer: WO 2019/030020

(56) Entgegenhaltungen:
- WO-A1-02/34620
- GB-A- 1 523 714
- US-A- 2 469 480
- US-A- 2 574 651
- US-A- 2 712 356
- US-A- 2 941 603
- US-A1- 2003 052 222
- US-A1- 2004 124 310
- US-B1- 9 517 838

## Beschreibung

### Gebiet der Erfindung

Die vorliegende Erfindung betrifft senkrechtstartfähige Luftfahrzeuge. Insbesondere betrifft die Erfindung ein Luftfahrzeug mit Schwebeflugeigenschaften.

### Hintergrund der Erfindung

Es existieren bereits eine Vielzahl von verschiedenen Flugkonfigurationen, mit denen ein Schwebeflug möglich ist. Beispielsweise können sich Hubschrauber in einem Schwebeflug bewegen. Dabei kommt es jedoch häufig vor, dass der Hubschrauber selbst bei annäherndem Stillstand in der Luft eine langsame Relativbewegung gegenüber der Erdoberfläche ausführt. Um diese Relativbewegung zu unterbinden, müssen steuerungsgebundene Gegenbewegungen ausgeführt werden. Dadurch wird zusätzliche Energie verbraucht, was sich insbesondere auf die Langzeitflugeigenschaften auswirkt. Dieser nachteilige Effekt tritt nicht nur bei Hubschraubern auf, sondern auch bei anderen bemannten und unbemannten Luftfahrzeugen mit Schwebeflugeigenschaften.

Die US 2003/052222 A1 beschreibt ein Luftfahrzeug mit einem toroidalen Rumpf mit einer Längsachse und einem Kanal, der sich entlang der Längsachse zwischen einer Vorderkante und einer Hinterkante des Rumpfes erstreckt. Das Luftfahrzeug weist zudem eine erste und eine zweite gegenläufige Rotoranordnung mit variabler Neigung auf, die koaxial innerhalb des Kanals des Rumpfes montiert sind. Weiterhin weist das Flugzeug mindestens einen Canard-Flügel auf, der an dem toroidalen Rumpf befestigt ist und eine Vorderkante aufweist, die außerhalb des Kanals des Rumpfes und axial vor der Vorderkante des Rumpfes angeordnet ist, wobei mindestens ein Teil des Canard-Flügels eine Steuerfläche mit einem variablen Anstellwinkel aufweist. Es wird ein Luftfahrzeug bereitgestellt, das vertikal starten und landen, über längere Zeiträume über einem festen räumlichen Punkt schweben und in engen Bereichen operieren kann. Das Luftfahrzeug hat auch die Fähigkeit, zwischen einem Schwebeflug und einem Vorwärtsflug mit hoher Geschwindigkeit zu wechseln.

Die WO 02/34620 A1 beschreibt ein unbemanntes, rotorgetriebenes Flugzeug mit einer Antriebseinheit mit einem Antriebsmotor, der über eine Rotorwelle mit einem Rotorelement verbunden ist, um einen im Wesentlichen abwärts gerichteten Luftstrom zu erzeugen. Das Flugzeug wiest einen Lastträger auf, der unterhalb der Antriebseinheit angeordnet und mit dieser verbunden ist, und eine Steuereinrichtung, deren Winkelbewegung unabhängig von dem Lastträger ist und die ein Trägerelement aufweist, das mit einstellbaren Rudern versehen ist, die so angeordnet sind, dass sie durch den von dem Ruderelement erzeugten Luftstrom beeinflusst werden, um die Bewegung des Fahrzeugs zu steuern. Die Rotorwelle weist eine untere Rotorwelle und eine obere Rotorwelle auf, wobei die Rotorwellen gelenkig miteinander durch ein erstes Verbindungselement verbunden sind, das eine begrenzte Winkelbewegung zwischen der unteren Rotorwelle und der oberen Rotorwelle ermöglicht.

Die US 9 517 838 B1 beschreibt einen Hubschrauber, der ein Auftriebsmodul mit einem Antriebssystem und mindestens einem Rotor, der durch das Antriebssystem in Rotation versetzt wird, aufweist. Ein Nutzlastträgersystem ist so ausgelegt, dass eine externe Nutzlast direkt an das Auftriebsmodul gekoppelt werden kann.

### Zusammenfassung der Erfindung

Es ist eine Aufgabe der vorliegenden Erfindung, die Flugeigenschaften von schwebeflugfähigen Luftfahrzeugen zu verbessern.

Diese Aufgabe wird durch den Gegenstand des unabhängigen Anspruchs gelöst. Beispielhafte Ausführungsformen ergeben sich aus den abhängigen Ansprüchen und der nachfolgenden Beschreibung.

Gemäß einem Aspekt der Erfindung ist ein schwebeflugfähiges Luftfahrzeug angegeben, welches eine Antriebseinheit und eine Rumpfeinheit aufweist. Die Antriebseinheit weist einen ersten Rotor zum Bereitstellen einer Vortriebskraft auf das Luftfahrzeug auf. Die Rumpfeinheit erstreckt sich zum Beispiel entlang einer Rotationsachse des ersten Rotors und weist bezüglich der Rotationsachse des ersten Rotors eine rotationssymmetrische Form auf. Dies ist insbesondere dann der Fall, wenn der erste Rotor nicht gegenüber einer Längsachse der Rumfeinheit verkippt ist, beispielsweise in einer Ausgangskonfiguration. Jedenfalls kann sich die Rumpfeinheit entlang der Längsachse der Rumpfeinheit erstrecken, wobei die Rumpfeinheit bezüglich ihrer Längsachse eine rotationssymmetrische Form aufweist. Die Rumpfeinheit weist an einem ersten Ende eine Aufhängung auf, über welche die Rumpfeinheit mit dem ersten Rotor derart gekoppelt ist, dass die Rumpfeinheit zum ersten Rotor entlang der Rotationsachse beabstandet ist, das heißt ein räumlicher Abstand zwischen der Rumpfeinheit und dem ersten Rotor vorgesehen ist. Im Bereich eines zweiten Endes der Rumpfeinheit ist eine Erfassungseinheit zum Erfassen einer Umgebungsinformation vorgesehen. Die Antriebseinheit ist dazu ausgeführt, das Luftfahrzeug in einem Schwebeflugzustand zu halten, so dass eine relative Position des Luftfahrzeugs bezüglich eines Referenzpunktes auf der Erdoberfläche quasi unverändert bleibt.

Mit einem solchen Luftfahrzeug ist es möglich, über einen längeren Zeitraum stabil in einem Schwebeflugzustand zu verweilen, bei welchem unter Idealbedingungen, das heißt bei Windstille, keine Relativbewegung des Luftfahrzeugs gegenüber der Erdoberfläche auftritt. Aufgrund der Symmetrieeigenschaften des erfindungsgemäßen Luftfahrzeugs sind keine Gegenbewegungen, beispielsweise durch entsprechende aerodynamische oder antriebsgebundene Gegensteuerungen, erforderlich, damit das Luftfahrzeug an Ort und Stelle in der Luft verbleibt. Es ist insbesondere möglich, dass das Luftfahrzeug über zumindest 12 Stunden, vorzugsweise über zumindest 24 in dem Schwebeflugzustand verweilen kann, bei dem das Luftfahrzeug seine relative Position bezüglich des Referenzpunktes auf der Erdoberfläche nicht verändert. Der Referenzpunkt ist dabei beispielsweise ein Punkt in einem erdfesten Koordinatensystem. Der Schwebeflugzustand kann dabei als ein Flugzustand verstanden werden, bei dem die relative Geschwindigkeit des Luftfahrzeugs gegenüber der Erdoberfläche so gering ist, dass der Auftrieb zur Überwindung der Gewichtskraft des Luftfahrzeugs lediglich durch die Antriebseinheit bereitgestellt wird. Das Luftfahrzeug kann dazu ausgeführt sein, zumindest 80 kg an Nutzlast zu befördern. Das Luftfahrzeug kann ferner dazu ausgeführt sein, diese Nutzlast über eine Reichweite von 1550 km zu befördern.

Das Luftfahrzeug ist ein senkrechtstart- und landefähiges (VTOL) Luftfahrzeug. Ferner ist das Luftfahrzeug im Schwebeflugzustand sehr leise und hat einen geringeren Schadstoffausstoß als beispielsweise Hubschrauber, da aufgrund der symmetrischen Konfiguration des erfindungsgemäßen Luftfahrzeugs keine den Schwebeflugzustand korrigierenden Steuerbewegungen erforderlich sind.

Das Luftfahrzeug kann ein unbemanntes Luftfahrzeug oder ein bemanntes Luftfahrzeug sein. Ferner kann das Luftfahrzeug ein autonom fliegendes Luftfahrzeug sein oder ferngesteuert werden. Das Luftfahrzeug kann insbesondere eine Steuerungseinheit aufweisen, mittels welcher die Antriebseinheit angesteuert werden kann. Ferner kann durch die Steuerungseinheit ein Landegestell angesteuert werden, wie es im weiteren Verlauf noch genauer beschrieben wird. Die Fernsteuerung des Luftfahrzeugs kann mittels Radiofrequenzwellen erfolgen.

Für den Fall, dass das Luftfahrzeug autonom gesteuert ist, kann beispielsweise vor dem Start ein Steuerungsprogramm durch die Steuerungseinheit eingelesen werden, so dass das Luftfahrzeug anschließend auf der Grundlage des eingelesenen Programms durch die Steuerungseinheit gesteuert wird. Das eingelesene Programm kann Daten über eine abzufliegende Flugroute aufweisen. Eine Ortung des Luftfahrzeugs kann dabei über GPS-Daten erfolgen.

Dadurch, dass das Luftfahrzeug sowohl ferngesteuert als auch autonom fliegen kann, kann das Luftfahrzeug auch als ein semi-autonom gesteuertes Luftfahrzeug betrieben werden. Somit kann das Luftfahrzeug mittels der GPS-Daten und der vorgegebenen Flugroute seine Mission autonom durchführen, ohne weitere Eingaben durch eine Bodenstation während der Mission zu erhalten. Um die Mission autonom durchführen zu können, ist dann lediglich noch eine Datenverbindung zwischen der Erfassungseinrichtung und der Steuerungseinheit des Luftfahrzeugs erforderlich.

Die Antriebseinheit des Luftfahrzeugs weist beispielsweise einen Verbrennungsmotor oder einen Elektromotor auf. Im Falle eines Verbrennungsmotors wird dieser beispielsweise mit Diesel betrieben. Vorzugsweise weist die Antriebseinheit einen Kolbenmotor auf. Der Kolbenmotor weist zum Beispiel vier Kolben auf und kann dazu ausgeführt sein, den ersten Rotor des Luftfahrzeugs anzutreiben. Der spezifische Treibstoffverbrauch des Motors beträgt zum Beispiel maximal 250 g/kWh, vorzugsweise 212 g/kWh. Der Motor weist beispielsweise ein Gewicht von maximal 84 kg auf und weist einen 10kW-Startergenerator auf, der als Energiequelle für die Nutzlast bzw. die Erfassungseinheit verwendet werden kann. Der Schwerpunkt des Motors kann auf der Rotationsachse des ersten Rotors liegen. Der Gesamtdurchmesser des Motors kann kleiner als 650 mm, vorzugsweise 648 mm sein. Der Hubraum des Kolbenmotors kann etwa 2,66 1 betragen.

Der Motor der Antriebseinheit kann in derjenigen Hälfte der Rumpfeinheit angeordnet sein, die im Bereich des ersten Endes der Rumpfeinheit liegt. Damit befindet sich der Motor in der Ausgangskonfiguration unterhalb des ersten Rotors, jedoch über die Aufhängung beabstandet zum Rotor. Die Antriebseinheit weist den ersten Rotor auf und kann auch einen zweiten Rotor aufweisen. Dabei können sowohl der erste Rotor als auch der zweite Rotor durch den Motor angetrieben werden. Es können auch ein oder bevorzugt mehrere Tanks vorgesehen sein, welche zur Aufnahme von Treibstoff geeignet sind, um den Motor mit Treibstoff zu versorgen. Dabei können die Tanks zwischen dem ersten Rotor und dem Motor angeordnet sein, das heißt die Tanks können in einem Schwebeflugzustand des Luftfahrzeugs über dem Motor liegen. Auf diese Weise können die Tanks möglichst nahe, insbesondere näher als jedes andere Bauteil des Luftfahrzeugs, am Rotor positioniert sein, damit ein zu starkes Wandern des Schwerpunkts vermieden wird, während der Treibstoff in den Tanks verbraucht wird. Dadurch wird ein stabiler Schwebeflug weiter begünstigt. Die Tanks können zumindest teilweise in der Rumpfeinheit angeordnet sein.

Durch die Antriebseinheit kann eine Vortriebskraft bzw. eine Auftriebskraft auf das Luftfahrzeug ausgeübt werden. Die Vortriebskraft zieht sozusagen das Luftfahrzeug von der Erdoberfläche weg und entfernt es von dieser, so dass das Luftfahrzeug in einen Flugzustand übergehen kann. Mit Hilfe des ersten Rotors kann sich das Luftfahrzeug über einen bestimmten Referenzpunkt auf der Erdoberfläche positionieren und anschließend über diesem Punkt für einen vorbestimmten Zeitraum verweilen. Mit anderen Worten kann das Luftfahrzeug dazu ausgeführt sein, eine Flugbewegung mit einer Relativbewegung bezüglich der Erdoberfläche auszuführen, aber auch einen Schwebeflug ohne Relativbewegung gegenüber der Erdoberfläche auszuführen. Um das Luftfahrzeug relativ zur Erdoberfläche zu bewegen, kann der erste Rotor gegenüber der Längsachse der Rumpfeinheit gekippt werden, so dass die Rotationsachse des ersten Rotors gegenüber der Längsachse der Rumpfeinheit verkippt ist.

Die Rumpfeinheit kann eine längliche Form aufweisen. Beispielswiese ist eine Längsausdehnung entlang der Längsachse der Rumpfeinheit zumindest doppelt so groß wie ein Durchmesser der Rumpfeinheit. Vorzugsweise ist die Längsausdehnung der Rumpfeinheit zumindest dreimal so groß wie der Durchmesser der Rumpfeinheit. Die Rumpfeinheit weist bezüglich ihrer Längsachse und/oder bezüglich der Rotationsachse des ersten Rotors eine rotationssymmetrische Form auf. Vorzugsweise weist die Rumpfeinheit zumindest teilwiese eine Zylinderform auf, wobei sich der Zylinder entlang der Rotationsachse des ersten Rotors und/oder der Längsachse der Rumpfeinheit erstreckt. Die Rumpfeinheit kann damit als eine Art zylindrische Box angesehen werden. Die Rumpfeinheit kann zur Aufnahme und Beförderung einer Person geeignet sein.

Die Rumpfeinheit weist ein erstes Ende auf, welches dem ersten Rotor zugewandt ist. Die Rumpfeinheit weist auch ein zweites Ende auf, welches von dem ersten Rotor abgewandt ist. Die Rumpfeinheit weist zum Beispiel Verkleidungsteile oder eine Hülle auf, so dass die Rumpfeinheit ein zur Umgebung abgeschlossenes Bauteil sein kann. Die Verkleidungsteile können lösbar an der Rumpfeinheit befestigt sein. Ferner kann die Rumpfeinheit eine Stützstruktur aufweisen, an welcher die Verkleidungsteile befestigt sind. Die Antriebseinheit kann zumindest teilweise durch die Verkleidungsteile der Rumpfeinheit verkleidet sein. Insbesondere ist der Motor durch die Verkleidungsteile der Rumpfeinheit verkleidet und der erste Rotor ist nicht verkleidet. Die Rumpfeinheit weist also eine Verkleidung auf, welche die innerhalb der Rumpfeinheit angeordneten Bauteile vor äußeren Einflüssen schützt. Ferner kann durch die Verkleidung eine verbesserte Aerodynamik, insbesondere in Bezug auf die durch den Rotor beschleunigte Luft (sog. downwash) bereitgestellt werden. Innerhalb der Verkleidung können der Motor, die Erfassungseinheit, Stützstrukturen und/oder Tanks angeordnet sein. Die Verkleidung der Rumpfeinheit kann eine Sandwich-Bauweise aufweisen. Die dafür erforderlichen Paneele können Aramid-Fasern aufweisen, um somit einen Schutz vor Steinschlag bereitzustellen. Neben den Aramid-Fasern kann die Sandwichstruktur einen Schaumkern aufweisen. Reparaturen von beschädigten Verkleidungs- bzw. Außenhautteilen können mittels Auflaminieren von neuen Schichten mit Aramid-Fasern durchgeführt werden

Im Bereich des ersten Endes der Rumpfeinheit ist die Aufhängung vorgesehen, welche den ersten Rotor bewegbar an der Rumpfeinheit befestigt. Die bewegbare Befestigung erfolgt beispielsweise über einen Taumelmechanismus. Die Aufhängung kann aus der Rumpfeinheit herausragen, um somit den Abstand zwischen dem ersten Ende der Rumpfeinheit und dem ersten Rotor zu überbrücken. Die Beabstandung des ersten Rotors von dem ersten Ende der Rumpfeinheit entlang der Rotationsachse über die Aufhängung kann daher als eine Art hängende Konfiguration verstanden werden, bei der die Rumpfeinheit quasi an dem ersten Rotor hängt.

Im Bereich des zweiten Endes der Rumpfeinheit ist die Erfassungseinheit vorgesehen. Die Erfassungseinheit kann dabei innerhalb der Verkleidung der Rumpfeinheit vorgesehen sein, um von Umgebungseinflüssen geschützt zu sein und um die Aerodynamik zu verbessern. Die Erfassungseinheit ist zum Beispiel eine Sensoreinheit zum Detektieren von Signalen aus der Umgebung des Luftfahrzeugs. Die Erfassungseinheit kann eine Kamera zum Empfang von optischen Signalen oder eine Radareinheit zum Empfang elektromagnetischer Signale, insbesondere Funkwellen sein. Die Kamera kann optische Signale im sichtbaren und/oder im Infrarotbereich empfangen und verarbeiten.

Gemäß einer Ausführungsform der Erfindung liegt ein Schwerpunkt des Luftfahrzeugs auf der Rotationsachse des ersten Rotors, wenn sich das Luftfahrzeug in einer Ausgangskonfiguration befindet, bei der die Rotationsachse des ersten Rotors gegenüber der Längsachse der Rumpfeinheit nicht verkippt ist.

Dadurch kann eine koaxiale Anordnung des ersten Rotors mit der rotationssymmetrischen Rumpfeinheit bereitgestellt werden, bei der die Schwebeflugeigenschaften weiter verbessert werden. Die Rotationsachse des ersten Rotors kann also in der Ausgangskonfiguration auch eine Rotationsachse bzw. eine Längsachse der rotationssymmetrischen Rumpfeinheit sein. Durch eine solche symmetrische und koaxiale Konfiguration des Luftfahrzeugs können nachteilige Steuerungseffekte im Schwebeflug vermieden werden. Insbesondere ist eine Gegensteuerung zum Ausgleich einer leichten Relativbewegung des Luftfahrzeugs bezüglich der Erdoberfläche kaum noch erforderlich. Die Schwebeflugeffizienz wird weiterhin dadurch verbessert, dass ein zweiter, koaxial zum ersten Rotor angeordneter Rotor, vorgesehen wird, der sich entgegengesetzt zum ersten Rotor dreht. Dadurch kann ein durch den ersten Rotor entstehendes, auf das Luftfahrzeug wirkendes Drehmoment ausgeglichen werden, so dass quasi keine Relativbewegung zwischen dem Referenzpunkt der Erdoberfläche und dem Luftfahrzeug mehr stattfindet.

Nicht zuletzt wird dadurch ermöglicht, dass kein Heckausleger oder Heckrotor benötigt wird und somit Gewicht eingespart werden kann.

Gemäß einer weiteren Ausführungsform der Erfindung ist die Erfassungseinheit dazu ausgeführt, ein optisches Signal oder ein elektromagnetisches Signal zu empfangen. Es kann vorgesehen sein, dass die Erfassungseinheit sowohl zum Empfang eines optischen Signals als auch zum Empfang eines elektromagnetischen Signals ausgeführt ist.

Die Erfassungseinheit kann also eine Kamera sein, die zum Empfang des optischen Signals ausgeführt ist. Ferner kann die Erfassungseinheit eine Radareinheit sein, die zum Empfang des elektromagnetischen Signals ausgeführt ist. Damit ist es möglich, das Luftfahrzeug als Minensuchgerät einzusetzen, was von Vorteil ist, da das Luftfahrzeug als unbemannte Konfiguration autonom oder ferngesteuert betrieben werden kann. Die Erfassungseinheit ist in diesem Fall ein Minendetektor, der mittels Radarsignale Minen auf der Erdoberfläche orten kann. Dabei wird die Erdoberfläche durch die Erfassungseinheit systematisch abgescannt, so dass bei Erkennung einer Mine ein Warnsignal ausgegeben werden kann, beispielsweise an eine Bodenstation.

Ferner kann das Luftfahrzeug als Rettungsgerät in Notfällen, beispielsweise als Transportmittel in schwer zugänglichen Regionen eingesetzt werden. Ebenfalls möglich ist der Einsatz des Luftfahrzeugs als Suchgerät zum Aufspüren von vermissten Personen in schwerzugänglichem Terrain. Beispielsweise ist der Einsatz des Luftfahrzeugs zum Aufspüren von Personen in einem Erdbebengebiet von Vorteil, da mit dem Luftfahrzeug schwer zugängliche Regionen erreicht werden können und somit die Gefahr weiterer Personenschäden vermieden werden kann. Über die Erfassungseinheit kann eine drahtlose Kommunikation zwischen dem Luftfahrzeug und einer Bodenstation erfolgen, um Rettungskräfte bei ihrem Einsatz im Erdbebengebiet zu koordinieren.

Zudem kann das Luftfahrzeug als Flutlichtanlage eingesetzt werden. Hierfür kann eine entsprechende Beleuchtungseinheit am Luftfahrzeug, insbesondere an der Rumpfeinheit vorgesehen sein. Es kann eine Hochleistungs-LED am Luftfahrzeug vorgesehen sein, beispielsweise mit einer Leistung von 1 kW.

Gemäß einer weiteren Ausführungsform der Erfindung stellt das erste Ende der Rumpfeinheit im Schwebeflugzustand das der Erdoberfläche abgewandte Ende der Rumpfeinheit dar und/oder das zweite Ende der Rumpfeinheit stellt im Schwebeflugzustand das der Erdoberfläche zugewandte Ende der Rumpfeinheit dar.

Die Rumpfeinheit ist über die Aufhängung sozusagen an den ersten Rotor gehängt, so dass das zweite Ende der Rumpfeinheit in Richtung der Erdoberfläche zeigt. Dadurch kann der Abstand der Erfassungseinheit, welche im Bereich des zweiten Endes der Rumpfeinheit vorgesehen ist, so gewählt werden, dass störende Einflüsse des ersten Rotors oder der Antriebseinheit insgesamt auf den Empfang durch die Erfassungseinheit weitgehend unterbunden werden. Mit anderen Worten können durch die Erfassungseinheit Empfangssignale ungestört über einen großen Bereich aus der Umgebung des Luftfahrzeugs empfangen werden.

Gemäß einem Beispiel zum besseren Verständnis weisen Rotorblätter des ersten Rotors eine Profilform auf, die über eine Längsausdehnungsrichtung der Rotorblätter unverändert bleibt.

Die Längsausdehnungsrichtung der Rotorblätter ist dabei zum Beispiel die Haupterstreckungsrichtung der beiden Rotorblätter, das heißt diejenige Erstreckungsrichtung, entlang welcher sich die beiden Rotorblätter erstrecken. Jedes einzelne Rotorblatt weist eine aerodynamische Profilform auf, welche einen Auftrieb erzeugen kann. Die Form dieses aerodynamischen Profils verändert sich entlang der Längsausdehnungsrichtung bzw. der Haupterstreckungsrichtung nicht. Jedoch ist es möglich, dass sich die Querschnittsfläche entlang der Längsausdehnungsrichtung verändert.

Diese Konfiguration von Rotorblättern reduziert Lärmemissionen und stellt zudem einen einfach aufgebauten Mechanismus dar. Es ist aufgrund der Symmetrie des Gesamtsystems kein zusätzlicher Heckrotor zum Ausgleich von Drehmomenten oder anderen systeminhärenten, unerwünschten Bewegungen notwendig.

Die Rotorblätter sind zum Beispiel aus kohlenstofffaserverstärktem Kunststoff gefertigt. Dabei können die Rotorblätter aus kohlenstofffaserverstärktem Kunststoff und einem Schaumkern mittels eines Harzinjektionsverfahrens hergestellt sein.

Gemäß einem Beispiel zum besseren Verständnis verringert sich eine Querschnittsfläche der Profilform der Rotorblätter in der Längsausdehnungsrichtung der Rotorblätter ausgehend von der Rotationsachse.

Dadurch kann über die gesamte Länge der Rotorblätter ein nach außen, das heißt zur Rotorblattspitze linear ansteigender Auftrieb bzw. Schub erreicht werden. Insbesondere kann zusammen mit einer bestimmten Verwindung des Rotorblattprofils um die Längsausdehnungsrichtung ein gleichmäßiger Auftrieb pro Flächeneinheit eines Rotorblatts erreicht werden.

Das bedeutet, dass ein Querschnittsprofil des Rotorblattes, welches nahe an der Rotationsachse des ersten Rotors liegt, eine größere Querschnittsfläche aufweist als ein weiter entfernt zur Rotationsachse liegendes Querschnittsprofil, wobei die Form der Querschnittsprofile stets gleich ist. Das Querschnittsprofil der Rotorblätter ist somit entlang der Längsausdehnungsrichtung skaliert.

Gemäß einem Beispiel zum besseren Verständnis sind die Rotorblätter des ersten Rotors mit zunehmender Entfernung zur Rotationsachse des ersten Rotors um die Längsausdehnungsrichtung verwunden.

Damit kann ein gleichmäßiger Auftrieb pro Flächeneinheit eines Rotorblatts erreicht werden. Mit anderen Worten kann dadurch ein Geschwindigkeitsprofil der durch den Rotor beschleunigten Luft erreicht werden, bei dem die Geschwindigkeit der beschleunigten Luft über die gesamte Länge eines Rotorblattes etwa konstant ist.

Verwindung bedeutet dabei, dass sich der Anstellwinkel eines Rotorblattes über die Längsausdehnungsrichtung verändert. Beispielsweise verringert sich der Anstellwinkel des Rotorblattprofils ausgehend von der Rotationsachse des ersten Rotors entlang der Längsausdehnungsrichtung.

Gemäß einer weiteren Ausführungsform der Erfindung weist die Aufhängung zur Kopplung des ersten Endes der Rumpfeinheit mit dem ersten Rotor einen Taumelmechanismus auf.

Dadurch kann eine bewegliche Befestigung des ersten Rotors an der Rumpfeinheit erreicht werden, so dass das Luftfahrzeug in seiner Bewegungsrichtung gegenüber der Erdoberfläche gesteuert werden kann. Es kann somit eine Relativbewegung des Luftfahrzeugs bezüglich der Erdoberfläche ermöglicht werden, indem der erste Rotor beispielsweise gegenüber der Längsachse der Rumpfeinheit verschwenkt bzw. verkippt wird. Der Taumelmechanismus kann eine Taumelscheibe, vorzugsweise jedoch zwei Taumelscheiben aufweisen. Ferner kann der Taumelmechanismus einen Rotormast aufweisen. Die erste Taumelscheibe ist um den Rotormast gelagert, lässt sich axial zum Rotormast verschieben und quer zum Rotormast neigen. Dadurch kann eine zyklische Neigungssteuerung des ersten Rotors bereitgestellt werden. Der Taumelmechanismus des ersten Rotors kann auch eine zweite Taumelscheibe aufweisen, die lediglich axial zum Rotormast verschiebbar ist. Es kann daher vorgesehen sein, dass lediglich eine kollektive Verstellung des ersten Rotors möglich ist.

Gemäß einer weiteren Ausführungsform der Erfindung weist das Luftfahrzeug einen zweiten Rotor auf, welcher koaxial zum ersten Rotor angeordnet ist. Der zweite Rotor ist über die Aufhängung an der Rumpfeinheit derart gekoppelt ist, dass die Rumpfeinheit zum zweiten Rotor entlang der Rotationsachse beabstandet ist. Eine Drehrichtung des ersten Rotors ist zu einer Drehrichtung des zweiten Rotors gegenläufig. Sämtliche zuvor genannten Eigenschaften in Bezug auf den ersten Rotor gelten auch für den zweiten Rotor.

Der zweite Rotor kann dabei zwischen der Rumpfeinheit und dem ersten Rotor angeordnet sein. Durch sich gegenläufig drehende Rotoren wird erreicht, dass ein durch die Drehung des ersten Rotors erzeugtes Drehmoment mittels des zweiten Rotors ausgeglichen werden kann und umgekehrt. Dadurch kann ein ruhiger Schwebeflugzustand erreicht werden, bei dem keine steuerungsgebundenen Gegenbewegungen ausgeführt werden müssen, sei es durch aerodynamische Steuerbewegungen oder durch eine antriebsgebundene Steuerung. Mit anderen Worten kann allein durch die koaxiale Anordnung der beider Rotoren und der rotationssymmetrischen Rumpfeinheit eine Konfiguration bereitgestellt werden, bei der Ausgleichssteuerbewegungen nicht erforderlich sind, um das Luftfahrzeug in einer konstanten Position zum Referenzpunkt auf der Erdoberfläche zu halten.

Gemäß einer weiteren Ausführungsform der Erfindung weist die Aufhängung zur Kopplung des ersten Endes der Rumpfeinheit mit dem zweiten Rotor einen Taumelmechanismus auf.

Dadurch kann wie beim ersten Rotor eine bewegliche Befestigung des zweiten Rotors an der Rumpfeinheit erreicht werden, so dass das Luftfahrzeug in seiner Bewegungsrichtung gegenüber der Erdoberfläche gesteuert werden kann. Es kann somit eine Relativbewegung des Luftfahrzeugs bezüglich der Erdoberfläche ermöglicht werden, indem der zweite Rotor beispielsweise gegenüber der Längsachse der Rumpfeinheit verschwenkt bzw. verkippt wird. Dabei kann vorgesehen sein, dass lediglich die Rotorblätter, das heißt eine Achse, die zwischen Rotorblattfuß und Rotorblattspitze verläuft, gegenüber der Längsachse verkippt wird. Dadurch kann auch eine zyklische Neigungssteuerung des zweiten Rotors bereitgestellt werden.

Gemäß einer weiteren Ausführungsform der Erfindung weist die Antriebseinheit einen Verbrennungsmotor auf, welcher zumindest teilwiese innerhalb der Rumpfeinheit angeordnet ist.

Vorzugsweise weist die Antriebseinheit einen Kolbenmotor auf. Die Antriebseinheit kann einen Dieselmotor aufweisen. Der Motor kann eine Leistung von mindestens 100kW, vorzugsweise 110 kW bereitstellen. Beispielsweise beträgt das Gewicht des Motors nicht mehr als 100 kg, vorzugsweise nicht mehr als 85 kg, insbesondere 84 kg. Der Motor kann innerhalb der Rumpfeinheit angeordnet sein, so dass lediglich die Aufhängung zur Kopplung des Motors mit dem ersten und dem zweiten Rotor teilweise außerhalb der Rumpfeinheit angeordnet ist.

Gemäß einer weiteren Ausführungsform der Erfindung weist das Luftfahrzeug ferner eine Manteleinheit auf, welche zumindest teilweise eine Zylinderform aufweist, die um den ersten Rotor herum angeordnet ist.

Die Manteleinheit kann kreisförmig bzw. ringförmig ausgebildet sein und sich um den ersten Rotor und um den zweiten Rotor herum erstrecken. Ein Querschnittsprofil der Manteleinheit weist zum Beispiel eine gebogene Kontur auf. Die Manteleinheit ist teilweise zylinderförmig ausgeführt und kann weiterhin einen trichterförmigen Abschnitt aufweisen. Beispielsweise schließt sich an den zylinderförmigen Abschnitt der Manteleinheit ein nach außen gebogener Abschnitt an, so dass der Eindruck eines Trichters entsteht. Die Manteleinheit kann aus einem Faserverbundmaterial oder aus einem Kunststoff gefertigt sein. Vorzugsweise ist die Manteleinheit aus einem kohlenstofffaserverstärkten Kunststoff gefertigt. Ferner kann die Manteleinheit in einer Sandwich-Bauweise gefertigt sein, wobei ein Kohlenstoff-Schaumkern oder ein Schaumkern eines anderen Materials zwischen zwei dünnen kohlenstofffaserverstärkten Platten vorgesehen sein kann. Dadurch kann eine hohe Biegefestigkeit der Manteleinheit erreicht werden. Die Manteleinheit kann eine aerodynamisch glatte Oberfläche aufweisen.

Durch die Manteleinheit kann aufgrund der ihrer besonderen Form eine verringerte Geräuschemission erreicht werden und die Effizienz der Antriebseinheit insgesamt erhöht werden. Zudem wird die Sicherheit erhöht, da drehende Rotorteile durch die Manteleinheit abgeschirmt sind. Der Druckabfall im Bereich des trichterförmigen Abschnitts, das heißt am Einlass der Manteleinheit, bewirkt einen zusätzlichen Auftrieb. Die Manteleinheit weist insbesondere keinen Diffuser auf.

Gemäß einer weiteren Ausführungsform der Erfindung ist die Manteleinheit über eine Fachwerkstruktur an der Rumpfeinheit befestigt.

Für die Fachwerkstruktur kann eine Leichtbauweise verwendet werden. Die Fachwerkstruktur kann aus einem Faserverbundwerkstoff, insbesondere aus Kohlenstofffaserverbundwerkstoff oder einem Kunststoff gefertigt sein. Vorzugsweise ist die Fachwerkstruktur jedoch aus einem Metall gefertigt. Insbesondere kommt hierfür ein Leichtmetall wie Aluminium oder eine Aluminiumlegierung in Frage. Es kann jedoch auch Stahl verwendet werden. Die Fachwerkstruktur kann an der Stützstruktur der Rumpfeinheit befestigt sein. Die Fachwerkstruktur kann in derjenigen Hälfte der länglichen Rumpfeinheit befestigt sein, in der sich das erste Ende der Rumpfeinheit befindet. Somit kann ein ausreichender Abstand zwischen der Erfassungseinheit und der Fachwerkstruktur bereitgestellt werden, so dass ein ungestörter Empfang von Signalen gewährleistet werden kann. Die Fachwerkstruktur kann röhrenförmige Elemente oder stabförmige Elemente aufweisen, welche durch Schweißverbindungen miteinander verbunden sind.

Gemäß der Erfindung weist das Luftfahrzeug ein Landegestell auf, welches beweglich an der Rumpfeinheit angebracht ist und dazu ausgeführt ist, das Luftfahrzeug bei der Landung auf der Erdoberfläche abzustützen.

Das Landegestell lässt sich beispielsweise einfahren bzw. einklappen. Das Landegestell weist, gemäß der Erfindung, zumindest drei Landestützen auf, wobei die drei Stützen jeweils einklappbar sind. Die drei Stützen des Landegestells können in einer Draufsicht auf das Luftfahrzeug in einem Winkel von jeweils 120° zueinander angeordnet sein, so dass die Last gleichmäßig verteilt wird. Das Landegestell ist dazu ausgeführt, dass Luftfahrzeug derart auf der Erdoberfläche abzustützen, dass die Rumpfeinheit mit der Erdoberfläche nicht in Kontakt kommt und die Rumpfeinheit oder auch Bauteile in der Rumpfeinheit einfach zu demontieren bzw. auszutauschen oder zu warten sind. Die Stützen des Landegestells können jeweils über zusätzliche Stützstreben mit der Fachwerkstruktur gekoppelt sein, um den Stützen eine bessere Stabilität zu verleihen.

Das Landegestell kann einen Ausfallsicherungs-Mechanismus, das heißt einen sog. "failsafe mechanism", aufweisen. Die Landestützen weisen eine stabförmige Konstruktion auf, welche einen geringen Luftwiderstand während des Fluges des Luftfahrzeugs generieren. Ferner kann das Landegestell eingeklappt werden, um somit die Sichtverhältnisse für die Erfassungseinheit, insbesondere für den Fall, dass die Erfassungseinheit eine Kamera ist, zu verbessern.

Das Landegestell kann einen Selbstschließmechanismus aufweisen, der die Landestützen im Landezustand in Position hält. Dieser Selbstschließmechanismus kann durch eine Feder vorgespannt sein, so dass die Landestützen in einer ausgeklappten Position gehalten werden. Der Schließmechanismus kann gelöst werden, wenn die Landestützen eingeklappt werden sollen. Über einen elektrisch angesteuerten Greifzug können die Landestützen betätigt werden.

Gemäß einer weiteren Ausführungsform der Erfindung weist die Rumpfeinheit ein Radom auf, welches lösbar an dem zweiten Ende der Rumpfeinheit befestigt ist.

Das Radom ist eine Antennenkuppel und bildet vorzugsweise den Abschluss der Rumpfeinheit am zweiten Ende. Somit behindern keine weiteren Bauteile des Luftfahrzeugs den Empfang von Signalen aus der Umgebung. Die Erfassungseinheit kann in der Rumpfeinheit unmittelbar hinter dem Radom angeordnet sein, welches damit eine geschlossene Schutzhülle bildet, die Antennen der Erfassungseinheit für Messungen (z. B. Radarantennen) oder für Datenübertragungen (z. B. Richtfunkantennen) vor äußeren mechanischen und chemischen Einflüssen wie Wind oder Regen schützt. Das Radom kann auch als Radarkuppel bezeichnet werden. Das Radom ist für Signale zur oder von der Erfassungseinheit durchlässig bzw. transparent.

### Kurze Beschreibung der Figuren

- Fig. 1: zeigt eine perspektivische Ansicht eines Luftfahrzeugs gemäß einem Ausführungsbeispiel der Erfindung.
- Fig. 2: zeigt eine Seitenansicht eines Luftfahrzeugs gemäß einem Ausführungsbeispiel der Erfindung.
- Fig. 3: zeigt eine perspektivische Ansicht von zwei Rotoren gemäß einem Ausführungsbeispiel der Erfindung.
- Fig. 4: zeigt eine Aufhängung zur Kopplung einer Rumpfeinheit mit Rotoren gemäß einem Ausführungsbeispiel der Erfindung.
- Fig. 5: zeigt eine perspektivische Ansicht eines Luftfahrzeugs mit einem teilweise eingeklappten Landegestell gemäß einem Ausführungsbeispiel der Erfindung.
- Fig. 6A: zeigt einen Abschnitt einer Rumpfeinheit gemäß einem Ausführungsbeispiel der Erfindung.
- Fig. 6B: zeigt einen Abschnitt einer Rumpfeinheit gemäß einem weiteren Ausführungsbeispiel der Erfindung.
- Fig. 6C: zeigt einen Abschnitt einer Rumpfeinheit gemäß einem weiteren Ausführungsbeispiel der Erfindung.
- Fig. 6D: zeigt ein Anschlusselement gemäß einem Ausführungsbeispiel der Erfindung.
- Fig. 6E: zeigt eine Stützstruktur gemäß einem Ausführungsbeispiel der Erfindung.
- Fig. 6F: zeigt ein Radom gemäß einem Ausführungsbeispiel der Erfindung.
- Fig. 7: zeigt eine Fachwerkstruktur gemäß einem Ausführungsbeispiel der Erfindung.
- Fig. 8A: zeigt eine Manteleinheit gemäß einem Ausführungsbeispiel der Erfindung.
- Fig. 8B: zeigt ein Querschnittsprofil einer Manteleinheit gemäß einem Ausführungsbeispiel der Erfindung.
- Fig. 9: zeigt Rotorblätter gemäß einem Ausführungsbeispiel der Erfindung.
- Fig. 10: zeigt einen Verbrennungsmotor gemäß einem Ausführungsbeispiel der Erfindung.
- Fig. 11: zeigt den Verlauf des Anstellwinkels zweier Rotorblätter über ihre Länge gemäß einem Ausführungsbeispiel der Erfindung.
- Fig. 12: zeigt den Verlauf der Blatttiefe zweier Rotorblätter über ihre Länge gemäß einem Ausführungsbeispiel der Erfindung.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

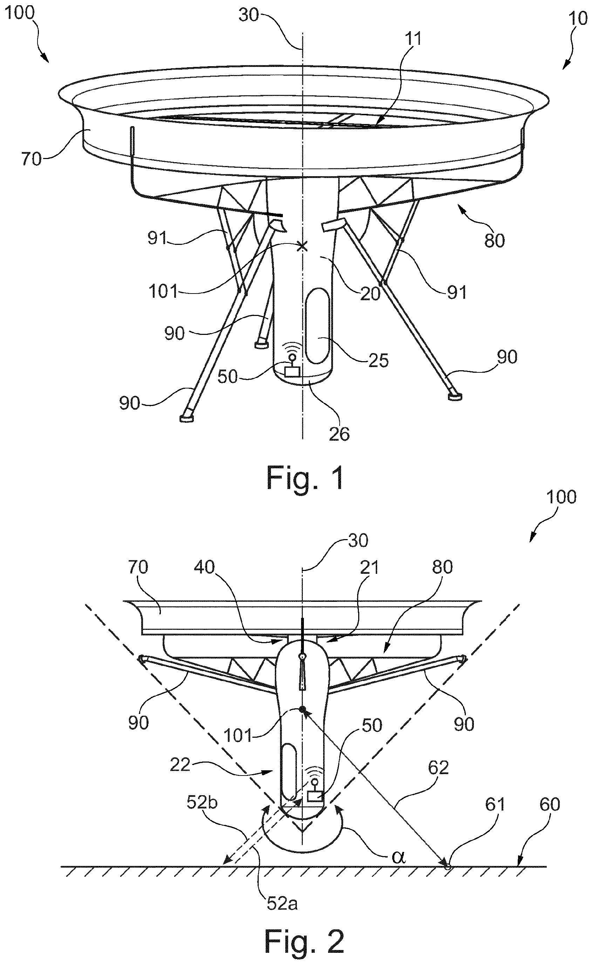

Fig. 1 zeigt eine perspektivische Ansicht eines Luftfahrzeugs 100. Das Luftfahrzeug 100 weist eine Rumpfeinheit 20 auf. Ferner weist das Luftfahrzeug 100 eine Antriebseinheit 10 mit einen ersten Rotor 11 zum Bereitstellen einer Vortriebskraft auf das Luftfahrzeug 100 auf. Die Antriebseinheit ist in Fig. 1 lediglich teilweise dargestellt, da nur der erste Rotor 11, nicht jedoch ein ebenfalls vorhandener zweiter Rotor sowie der Motor der Antriebseinheit 10 dargestellt ist. Die Rumpfeinheit 20 erstreckt sich entlang einer Rotationsachse 30 des ersten Rotors 11 und weist bezüglich der Rotationsachse 30 des ersten Rotors 11 eine rotationssymmetrische Form auf. Die Rumpfeinheit 20 erstreckt sich auch entlang einer Längsachse der Rumpfeinheit 20, welche auf der Rotationsachse 30 liegt, wenn der erste Rotor 11 nicht verkippt ist. Ein Schwerpunkt 101 des gesamten Luftfahrzeugs 100 liegt in einem Schwebeflugzustand auf der Rotationsachse 30 des ersten Rotors 11, wenn die Rotationsachse 30 nicht gegenüber der Längsachse der Rumpfeinheit 20 verkippt ist.

In dem in Fig. 1 dargestellten Zustand ist ein Landegestell 90 mit drei Landestützen ausgefahren, so dass das Luftfahrzeug 100 über das Landegestell 90 auf einer Erdoberfläche abgestützt werden kann. Die Landestützen des Landegestells 90 können weitere Stützstreben 91 aufweisen, welche ein Einfahren bzw. Einklappen der Landestützen ermöglichen und gleichzeitig für mehr Stabilität des gesamten Landegestells 90 sorgen.

In der Rumpfeinheit 20 ist eine Erfassungseinheit 50 vorgesehen, über welche Signale, insbesondere optische oder elektromagnetische Signale empfangen werden können. Zum Schutz der Erfassungseinheit kann die Rumpfeinheit 20 ferner ein Radom 26 aufweisen, das die Rumpfeinheit 20 an einem Ende abschließt.

Die Rumpfeinheit 20 weist eine Verkleidung auf, welche die innerhalb der Rumpfeinheit 20 angeordneten Bauteile vor äußeren Einflüssen schützt. Die Verkleidung ist zumindest teilweise zylinderförmig ausgebildet. Die Rumpfeinheit 20 weist ferner einen Zugang 25 auf, über den ein Zugriff auf die innerhalb der Rumfeinheit 20 angeordneten Bauteile bereitgestellt werden kann. Der Zugang 25 ist in Form einer schwenkbaren Tür ausgeführt, deren Oberfläche bündig mit der Verkleidung der Rumpfeinheit 20 abschließt. Die Rumpfeinheit 20 kann durch den Zugang 25 für eine Person zugänglich sein.

Das Luftfahrzeug 100 weist eine Manteleinheit 70 auf, die über eine Fachwerkstruktur 80 mit der Rumpfeinheit 20, insbesondere mit einer in Fig. 1 nicht dargestellten Stützstruktur der Rumpfeinheit 20 gekoppelt ist.

Wie in der Seitenansicht der Fig. 2 zu erkennen ist, weist die Rumpfeinheit 20 an einem ersten Ende 21 eine Aufhängung 40 auf, über welche die Rumpfeinheit 20 mit dem verdeckten ersten Rotor 11 und einem ebenfalls verdeckten zweiten Rotor derart gekoppelt ist, dass die Rumpfeinheit 20 zum ersten Rotor 11 und zum zweiten Rotor entlang der Rotationsachse 30 beabstandet ist. Im Bereich eines zweiten Endes 22 der Rumpfeinheit 20 ist die Erfassungseinheit 50 zum Erfassen einer Umgebungsinformation vorgesehen.

Die Antriebseinheit 10 ist dazu ausgeführt, das Luftfahrzeug 100, wie in Fig. 2 dargestellt, in einem Schwebeflugzustand zu halten, so dass eine relative Position des Luftfahrzeugs bezüglich eines Referenzpunktes 61 auf der Erdoberfläche 60 unverändert bleibt. Insbesondere kann das Luftfahrzeug 100 den Schwebeflugzustand so ausführen, dass sich ein Abstand 62 zwischen dem Schwerpunkt 101 des Luftfahrzeugs 100 und dem Referenzpunkt 61 auf der Erdoberfläche 60 quasi nicht verändert. Bei idealen Umgebungsbedingungen, das heißt bei Windstille bleibt die relative Position und die Orientierung des Luftfahrzeugs 100 im Schwebeflugzustand bezüglich dem Referenzpunkt 61 auf der Erdoberfläche 60 unverändert. Ferner kann bei nicht idealen Bedingungen, beispielsweise bei Wind, durch Steuerung mittels der Rotoren 11, 12 ein Stillstand erreicht werden, so dass die relative Position und die Orientierung des Luftfahrzeugs 100 im Schwebeflugzustand bezüglich dem Referenzpunkt 61 auf der Erdoberfläche 60 ebenfalls unverändert bleiben.

In Fig. 2 ist auch zu erkennen, dass das Landegestell 90 eingeklappt werden kann. Beim Einklappen des Landegestells 90 nach dem Start werden die Stützen des Landegestells 90 auf die Rotoren zubewegt, wobei die Landestützen 91 um einen Rotationspunkt an der Rumpfeinheit 20 gedreht werden. Dadurch kann ein größerer, freier Empfangsbereich für die Erfassungseinheit 50 bereitgestellt werden. Der Empfangsbereich, in dem ein ungestörter Empfang von Signalen aus der Umgebung möglich ist, wird durch einen Öffnungskegel begrenzt, dessen räumlicher Öffnungswinkel **α** bei eingeklapptem Landegestell 90 zumindest 260°, vorzugsweise genau 264,6° beträgt. Die Erfassungseinheit 50 kann ein Empfangssignal 52a, welches beispielsweise von der Erdoberfläche 60 oder aus der Umgebung des Luftfahrzeugs abgestrahlt wird, empfangen. Die Erfassungseinheit kann aber auch ein Sendesignal 52b in die Umgebung des Luftfahrzeugs abstrahlen.

Die Manteleinheit 70 verdeckt in der Seitenansicht des Luftfahrzeugs 100 die Rotoren vollständig, wenn sich die Rotoren in einem nicht verkippten Zustand befinden, wie er in Fig. 2 dargestellt ist.

In Fig. 2 ist weiterhin erkennbar, dass die Fachwerkstruktur 80 zur Befestigung der Manteleinheit 70 in der dem ersten Ende 21 zugewandten, oberen Hälfte der Rumpfeinheit 20 befestigt ist.

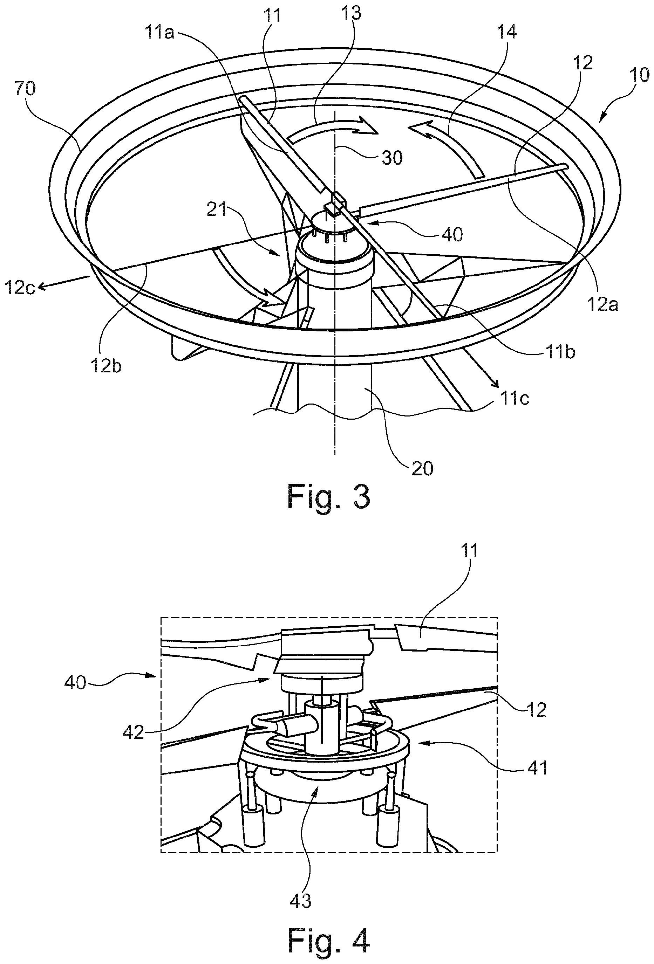

Fig. 3 zeigt den ersten Rotor 11 der Antriebseinheit 10, welcher zwei Rotorblätter 11a, 11b aufweist, wobei sich der erste Rotor 11 und damit die Rotorblätter 11a, 11b in die durch einen Pfeil gekennzeichnete erste Drehrichtung 13 drehen. Ebenso zeigt Fig. 3 den zweiten Rotor 12 der Antriebseinheit 10, welcher zwei Rotorblätter 12a, 12b aufweist, wobei sich der zweite Rotor 12 und damit die Rotorblätter 12a, 12b in die durch einen Pfeil gekennzeichnete zweite Drehrichtung 14 drehen. Die erste Drehrichtung 13 ist zur zweiten Drehrichtung 14 gegenläufig. Der erste Rotor 11 ist zum zweiten Rotor 12 koaxial angeordnet, das heißt beide Rotoren 11, 12 haben die gemeinsame Rotationsachse 30. Die Rotationsachse 30 bildet zudem auch die Längsachse bzw. Mittelachse der rotationssymmetrischen Rumpfeinheit 20, wenn die Rotoren 11, 12 nicht verkippt sind.

Die Rotorblätter 11a, 11b des ersten Rotors 11 sind ausgehend von der Rotationsachse 30 um eine Längsausdehnungsrichtung 11c verwunden bzw. verdreht. Ebenso sind die Rotorblätter 12a, 12b des zweiten Rotors 12 ausgehend von der Rotationsachse 30 um eine Längsausdehnungsrichtung 12c verwunden bzw. verdreht. Die Rotoren 11, 12 drehen sich innerhalb der Manteleinheit 70, wobei nur ein kleiner Spalt zwischen den Enden der Rotorblätter und einer Innenfläche der Manteleinheit 70 vorgesehen ist. Beide Rotoren 11, 12 sind über die Aufhängung 40 an dem ersten Ende 21 der Rumpfeinheit 20 mit dieser gekoppelt.

Fig. 4 zeigt die Aufhängung 40 zur Verbindung der Rumpfeinheit 20 mit dem ersten Rotor 11 und dem zweiten Rotor 12. Der erste Rotor 11 ist über einen Taumelmechanismus mit zwei Taumelscheiben 41, 42 mit der Rumpfeinheit 20 verbunden. Dabei ist die zweite Taumelscheibe 42, an welcher der erste Rotor 11 befestigt ist, über die erste Taumelscheibe 41 mit der Rumpfeinheit 20 verbunden. Damit kann der erste Rotor 11 kollektiv verstellt werden, das heißt die Taumelscheibe 42 ist axial verschiebbar.

Der zweite Rotor 12 ist über einen Taumelmechanismus mit einer Taumelscheibe 43 mit der Rumpfeinheit 20 verbunden. Durch diesen Taumelmechanismus kann der zweite Rotor 12 kollektiv und zyklisch verstellt werden, womit die Taumelscheibe 43 axial verschiebbar ist und verdreht bzw. verkippt werden kann. Durch diese Aufhängung 40 kann ein Verkippen des ersten Rotors 11 und des zweiten Rotors 12 bereitgestellt werden, um somit das Luftfahrzeug 100 relativ zur Erdoberfläche 60 entlang einer vorgegebenen Flugroute zu bewegen.

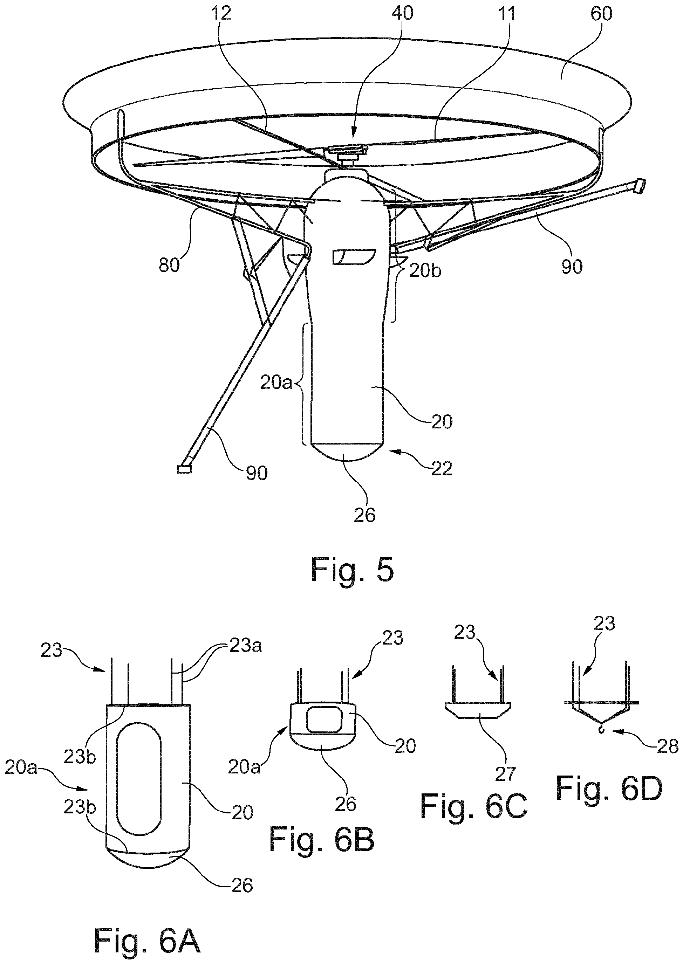

Fig. 5 zeigt eine perspektivische Ansicht des Luftfahrzeugs 100 mit einem teilweise eingeklappten Landegestell 90. Dabei ist eine Landestütze des Landegestells 90 eingeklappt und eine weitere Landestütze ist ausgeklappt. Sehr deutlich ist in Fig. 5 auch das die Rumpfeinheit 20 am zweiten Ende 22 abschließende Radom 26 zu erkennen. Die Rumpfeinheit 20 weist einen zylinderförmigen Abschnitt 20a auf. Wie in Fig. 1 und in Fig. 6A zu erkennen ist, ist in dem zylinderförmigen Abschnitt 20a der Zugang 25 angeordnet. Der verbleibende Abschnitt der Rumpfeinheit 20, der zwischen dem zylinderförmigen Abschnitt 20a und der Aufhängung 40 angeordnet ist, kann eine ausgebauchte Form aufweisen, wie in Fig. 5 zu erkennen ist. Jedenfalls sind sowohl der zylinderförmige Abschnitt 20a also auch der verbleibende, ausgebauchte Abschnitt 20b der Rumpfeinheit 20 rotationssymmetrisch ausgebildet. Im zylinderförmigen Abschnitt 20a kann die Erfassungseinheit 50 und/oder ein Volumen zur Aufnahme einer Nutzlast vorgesehen sein. Im verbleibenden Abschnitt 20b der Rumpfeinheit 20 können der Motor der Antriebseinheit 10 und/oder Tanks zur Treibstoffversorgung vorgesehen sein.

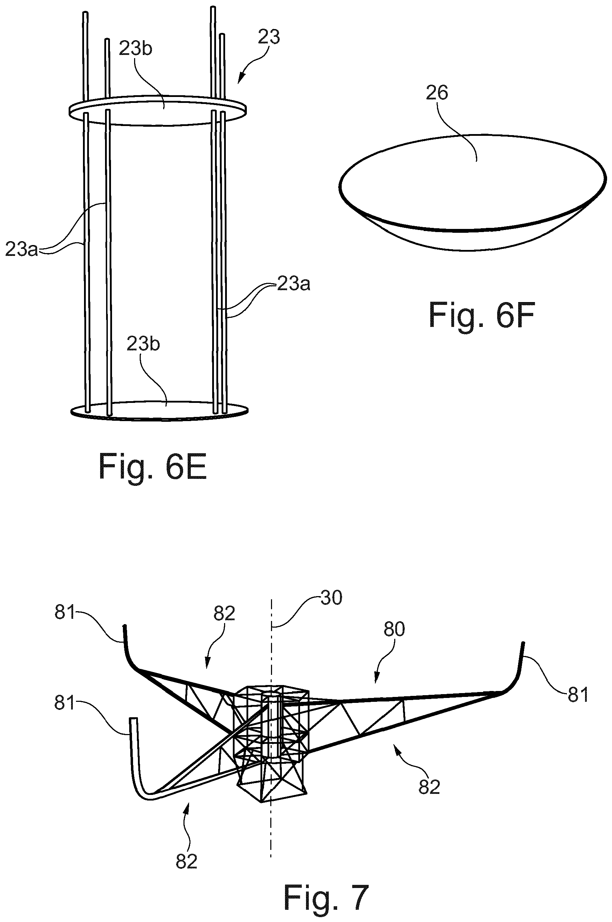

Fig. 6A zeigt lediglich den zylinderförmigen Abschnitt 20a sowie die Stützstruktur 23, an welcher die Verkleidung der Rumpfeinheit 20 befestigt ist. Die Stützstruktur 23 weist Stützstreben 23a bzw. Stützstäbe 23a auf. Ferner sind in Fig. 6A plattenförmige Stützelemente 23a im Ansatz zu erkennen. Eine deutlichere Darstellung der Stützstreben 23b und der plattenförmigen Stützelemente 23b kann der Fig. 6E entnommen werden. Der zylinderförmige Abschnitt 20a ist an dem verbleibenden Abschnitt 20b der Rumpfeinheit 20 lösbar befestigt. Ein Lösen bzw. Abtrennen des zylinderförmigen Abschnitts 20a wird durch das Entfernen von lediglich vier Bolzen oder vier Schrauben bewerkstelligt. Es ist möglich, dass der zylinderförmige Abschnitt 20a ein Gewicht von maximal 7 kg aufweist.

Fig. 6B zeigt den zylinderförmigen Abschnitt 20a sowie die Stützstruktur 23, wobei der zylinderförmige Abschnitt 23a gegenüber dem in Fig. 6A dargestellten zylinderförmigen Abschnitt 20a stark verkürzt ist.

Fig. 6C zeigt einen Abschnitt der Rumpfeinheit 20, welcher in Form einer einfachen Abdeckung 27 ausgebildet ist. Hier fehlt der zylinderförmige Abschnitt vollständig.

Fig. 6D zeigt ein Anschlusselement 28, welches anstatt des zylinderförmigen Abschnitts 20a an der Stützstruktur 23 befestigt ist. Das Anschlusselement 28 ist in dem hier dargestellten Fall ein Haken, an dem ein Teil der Rumpfeinheit 20 oder andere Bauteile angehängt werden können.

Fig. 6E zeigt die Stützstruktur 23. Die Stützstruktur 23 weist plattenförmige Stützelemente 23b und Stützstreben 23a auf, wobei die plattenförmigen Stützelemente 23b durch die Stützstreben 23a verbunden sind. Die Stützstreben 23a und/oder die plattenförmigen Stützelemente 23b können aus kohlenstofffaserverstärktem Kunststoff hergestellt sein. Jede der vier Stützstreben 23a kann dazu ausgeführt sein, zumindest 100 kg zu tragen.

Fig. 6Fzeigt ein Radom 26, welches auch als Radarkuppel oder Antennenkuppel bezeichnet werden kann. Das Radom 26 kann, wie in Fig. 6A dargestellt, direkt an einem der plattenförmigen Stützelemente 23b befestigt werden. Das Radom 26 kann aus Quarzfasern gefertigt sein, so dass Radarwellen durch das Radom 26 hindurchtreten können. Um die Erfassungseinheit 50 einfach in der Rumpfeinheit 20 montieren zu können, kann das Radom 26 abnehmbar an der Rumpfeinheit 20 befestigt sein. Das Radom 26 weist die Form eines Kugelschalensegments auf.

Fig. 7 zeigt die Fachwerkstruktur 80, welche drei Befestigungselemente 81 zur Befestigung der in Fig. 7 nicht dargestellten Manteleinheit 70 an der ebenfalls nicht dargestellten Rumpfstruktur 20 aufweist. Die Fachwerkstruktur 80 kann drei Tragarme 82 aufweisen, welche in einer Draufsicht auf die Fachwerkstruktur 80 in Winkeln von 120° zueinander um die Rotationsachse 30 herum angeordnet sind. Die Befestigungselemente 81 sind an ihren Enden im Wesentlichen parallel zur Rotationsachse 30 ausgerichtet. An diesen Enden der Befestigungselemente 81 wird die Fachwerkstruktur 80 an der Manteleinheit 70 befestigt. Diese Befestigung kann beispielsweise der Fig. 1 entnommen werden.

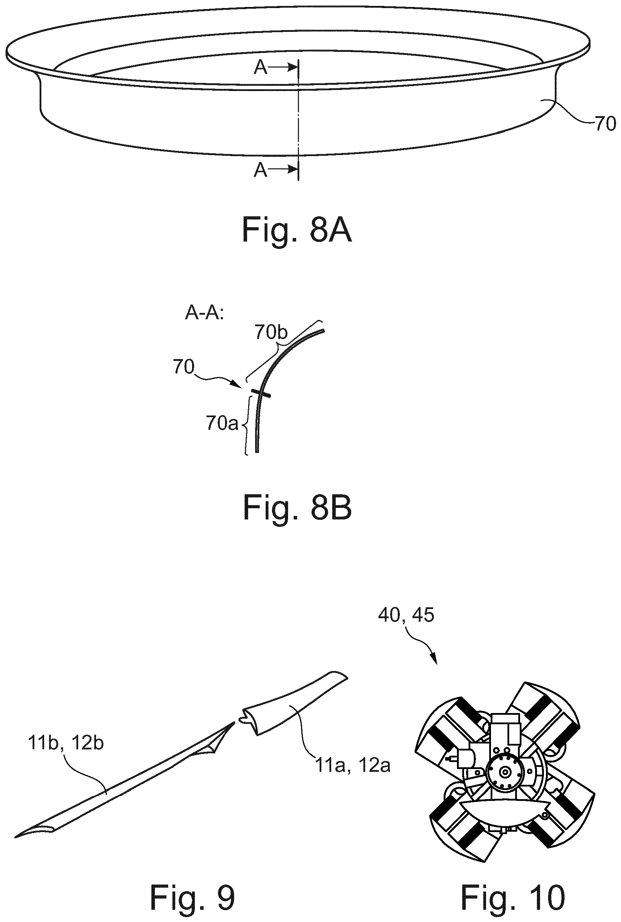

Fig. 8A zeigt die Manteleinheit 70, welche auch als sog. "duct" bezeichnet werden kann. Die Manteleinheit 70 ist kreisförmig bzw. ringförmig ausgebildet und zum Beispiel aus einem Faserverbundmaterial gefertigt.

Fig. 8B zeigt das Querschnittsprofil der Manteleinheit 70 für den Schnitt A-A aus Fig. 8A. Die Manteleinheit 70 weist einen zylinderförmigen Abschnitt 70a auf, der in einen trichterförmigen Abschnitt 70b übergeht. Dabei bildet der trichterförmige Abschnitt 70b im Querschnitt keinen vollständigen Viertelkreis.

Fig. 9 zeigt jeweils einen Abschnitt der Rotorblätter 11a, 11b bzw. der Rotorblätter 12a, 12b. Dabei ist deutlich zu erkennen, dass die Rotorblätter entlang ihrer Längsausdehnungsrichtung verwunden bzw. verdreht sind. Die Profilform ändert sich in Längsausdehnung nicht. Lediglich der örtliche Anstellwinkel einzelner Segmente sowie die Querschnittsfläche einzelner Segmente des Rotorblattprofils ändern sich in der Längsausdehnungsrichtung.

Fig. 10 zeigt einen Teil der Antriebseinheit 40, insbesondere den Motor 45 der Antriebseinheit 40, welcher ein Verbrennungsmotor sein kann. Der Verbrennungsmotor ist hier ein Kolbenmotor, welchem als Treibstoff Diesel zugeführt wird. Dazu können innerhalb der Rumpfeinheit 20 Tanks angeordnet sein. Die Tanks können so angeordnet sein, dass der Gesamtschwerpunkt 101 des Luftfahrzeugs 100 auf der Rotationsachse 30 bzw. der Längsachse der rotationssymmetrischen Rumpfeinheit 20 liegt. Insgesamt können sechs Tanks für das Luftfahrzeug vorgesehen sein, wobei sämtliche Tanks in der Rumpfeinheit 20 angeordnet sein können. Es kann ein einzelner Einfüllstutzen für die Tanks vorgesehen sein, über welchen sämtliche Tanks gleichmäßig befüllt werden können. Die Tanks können aus kohlenstofffaserverstärktem Kunststoff oder aus Polyethylen hergestellt sein. Es kann vorgesehen sein, dass jeder Tank weniger als 50 l Treibstoff aufnehmen kann.

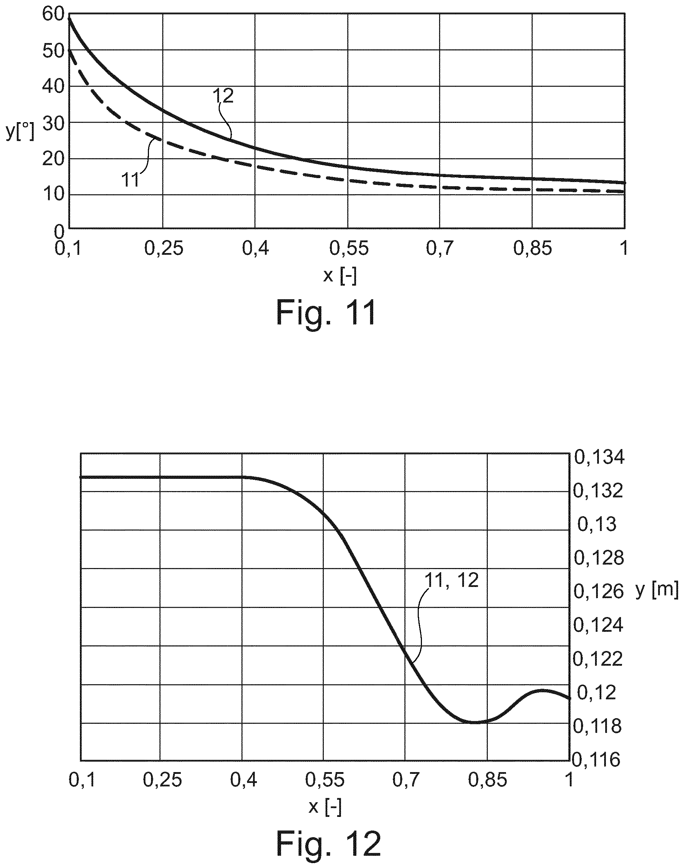

Fig. 11 zeigt den Verlauf des Anstellwinkels zweier Rotorblätter 11a, 11b bzw. 12a, 12b aufgetragen über den Radius des Rotors 11 bzw. 12. Der Anstellwinkel in Grad ist in dem Diagramm als Ordinate (y-Achse) aufgetragen und der Radius bezogen auf den Gesamtradius ist als Abszisse (x-Achse) aufgetragen. Zu erkennen ist, dass die Rotorblätter 11a, 11b des ersten Rotors 11 über die gesamte Rotorblattlänge einen geringeren Anstellwinkel aufweisen als die Rotorblätter 12a, 12b des zweiten Rotors 12.

Fig. 12 zeigt den Verlauf der Rotorblatttiefe zweier Rotorblätter 11a, 11b bzw. 12a, 12b aufgetragen über den Radius des Rotors 11 bzw. 12. Die Rotorblatttiefe in Metern ist in dem Diagramm als Ordinate (y-Achse) aufgetragen und der Radius bezogen auf den Gesamtradius ist als Abszisse (x-Achse) aufgetragen.

## Patentansprüche

1. Luftfahrzeug (100), aufweisend:
eine Antriebseinheit (10) mit einem ersten Rotor (11) zum Bereitstellen einer Vortriebskraft auf das Luftfahrzeug (100);
eine Rumpfeinheit, welche sich entlang einer Rotationsachse (30) des ersten Rotors (11) erstreckt und bezüglich der Rotationsachse (30) des ersten Rotors (11) eine rotationssymmetrische Form aufweist; und
ein Landegestell (90), welches beweglich an der Rumpfeinheit (20) angebracht ist und dazu ausgeführt ist, das Luftfahrzeug (100) bei der Landung auf der Erdoberfläche (60) abzustützen, wobei das Landegestell (90) zumindest drei Landestützen aufweist;
wobei die Rumpfeinheit (20) an einem ersten Ende (21) eine Aufhängung (40) aufweist, über welche die Rumpfeinheit (20) mit dem ersten Rotor (11) derart gekoppelt ist, dass die Rumpfeinheit (20) zum ersten Rotor (11) entlang der Rotationsachse (30) beabstandet ist;
wobei im Bereich eines zweiten Endes (22) der Rumpfeinheit (20) eine Erfassungseinheit (50) zum Erfassen einer Umgebungsinformation vorgesehen ist;
wobei die Antriebseinheit (10) dazu ausgeführt ist, das Luftfahrzeug (100) in einem Schwebeflugzustand zu halten, so dass eine relative Position des Luftfahrzeugs (100) bezüglich eines Referenzpunktes (61) auf der Erdoberfläche (60) unverändert bleibt;
wobei die Landestützen konfiguriert sind, in Richtung des ersten Rotors eingeklappt zu werden; und
wobei der Erfassungseinheit (50) bei eingeklapptem Landegestell (90) ein Empfangsbereich mit ungestörtem Empfang von Signalen aus der Umgebung bereitstellbar ist, wobei der Empfangsbereich mit ungestörtem Empfang durch einen Öffnungskegel mit einem räumlichen Öffnungswinkel von mindestens 260 Grad begrenzt ist.

2. Luftfahrzeug (100) nach Anspruch 1,
wobei ein Schwerpunkt (101) des Luftfahrzeugs (100) im Wesentlichen auf der Rotationsachse (30) des ersten Rotors (11) liegt.

3. Luftfahrzeug (100) nach einem der vorhergehenden Ansprüche,
wobei die Erfassungseinheit (50) dazu ausgeführt ist, ein optisches Signal (51) oder ein elektromagnetisches Signal (51) zu empfangen.

4. Luftfahrzeug (100) nach einem der vorhergehenden Ansprüche,
wobei das erste Ende (21) der Rumpfeinheit (20) im Schwebeflugzustand (110) das der Erdoberfläche (60) abgewandte Ende der Rumpfeinheit (20) darstellt; und
wobei das zweite Ende (22) der Rumpfeinheit (20) im Schwebeflugzustand (110) das der Erdoberfläche (60) zugewandte Ende der Rumpfeinheit (20) darstellt.

5. Luftfahrzeug (100) nach einem der vorhergehenden Ansprüche, wobei die Aufhängung (40) zur Kopplung des ersten Endes (21) der Rumpfeinheit (20) mit dem ersten Rotor (11) einen Taumelmechanismus (41, 42) aufweist.

6. Luftfahrzeug (100) nach einem der vorhergehenden Ansprüche, aufweisend:
einen zweiten Rotor (12), welcher koaxial zum ersten Rotor (11) angeordnet ist;
wobei der zweite Rotor (12) über die Aufhängung (40) an der Rumpfeinheit (20) derart gekoppelt ist, dass die Rumpfeinheit (20) zum zweiten Rotor (12) entlang der Rotationsachse (30) beabstandet ist; und
wobei eine Drehrichtung (13) des ersten Rotors (11) zu einer Drehrichtung (14) des zweiten Rotors (12) gegenläufig ist.

7. Luftfahrzeug (100) nach einem der vorhergehenden Ansprüche, wobei die Aufhängung (40) zur Kopplung des ersten Endes (21) der Rumpfeinheit (20) mit dem zweiten Rotor (12) einen Taumelmechanismus (43) aufweist.

8. Luftfahrzeug (100) nach einem der vorhergehenden Ansprüche, wobei die Antriebseinheit (10) ein Verbrennungsmotor (45) aufweist, welcher zumindest teilweise innerhalb der Rumpfeinheit (20) angeordnet ist.

9. Luftfahrzeug (100) nach einem der vorhergehenden Ansprüche, aufweisend:
eine Manteleinheit (70), welche zumindest teilweise eine Zylinderform aufweist, die um den ersten Rotor (11) herum angeordnet ist.

10. Luftfahrzeug (100) nach Anspruch 9, wobei die Manteleinheit (70) über eine Fachwerkstruktur (80) an der Rumpfeinheit (20) befestigt ist.

11. Luftfahrzeug (100) nach einem der vorhergehenden Ansprüche, wobei die Rumpfeinheit (20) ein Radom (26) aufweist, welcher lösbar an dem zweiten Ende (22) der Rumpfeinheit (20) befestigt ist.

## Claims

1. Aircraft (100), comprising:
a propulsion unit (10) with a first rotor (11) for providing a propulsion force on the aircraft (100) ;
a fuselage unit, which extends along a rotation axis (30) of the first rotor (11) and has a rotationally symmetric shape with respect to the rotation axis (30) of the first rotor (11); and
a landing gear (90) that is movably attached to the fuselage unit (20) and that is designed to support the aircraft (100) upon landing on the Earth's surface (60), wherein the landing gear (90) has at least three landing supports;
wherein the fuselage unit (20) has a suspension (40) at a first end (21) by means of which the fuselage unit (20) is coupled to the first rotor (11) so that the fuselage unit (20) is spaced apart from the first rotor (11) along the rotation axis (30);
wherein a detection unit (50) for the detection of environmental information is provided in the area of a second end (22) of the fuselage unit (20);
wherein the propulsion unit (10) is designed to keep the aircraft (100) in a hovering flight state, so that a relative position of the aircraft (100) with respect to a reference point (61) on the Earth's surface (60) remains unchanged;
wherein the landing supports are configured to be folded in towards the first rotor; and
wherein, when the landing gear (90) is folded in, the detection unit (50) can be provided with a receiving region with undisturbed reception of signals from the environment, wherein the receiving region with undisturbed reception is bounded by an acceptance cone with a spatial acceptance angle of at least 260 degrees.

2. Aircraft (100) according to Claim 1,
wherein a centre of gravity (101) of the aircraft (100) essentially lies on the rotation axis (30) of the first rotor (11).

3. Aircraft (100) according to either of the preceding claims,
wherein the detection unit (50) is designed to receive an optical signal (51) or an electromagnetic signal (51).

4. Aircraft (100) according to one of the preceding claims,
wherein in the hovering flight state (110) the first end (21) of the fuselage unit (20) represents the end of the fuselage unit (20) facing away from the Earth's surface (60); and
wherein in the hovering flight state (110) the second end (22) of the fuselage unit (20) represents the end of the fuselage unit (20) facing towards the Earth's surface (60).

5. Aircraft (100) according to one of the preceding claims,
wherein the suspension (40) for coupling the first end (21) of the fuselage unit (20) to the first rotor (11) has a swash plate mechanism (41, 42).

6. Aircraft (100) according to one of the preceding claims, comprising:
a second rotor (12), which is arranged coaxially to the first rotor (11);
wherein the second rotor (12) is coupled by means of the suspension (40) to the fuselage unit (20) so that the fuselage unit (20) is spaced apart from the second rotor (12) along the rotation axis (30); and
wherein a direction of rotation (13) of the first rotor (11) is opposite to a direction of rotation (14) of the second rotor (12).

7. Aircraft (100) according to one of the preceding claims,
wherein the suspension (40) for coupling the first end (21) of the fuselage unit (20) to the second rotor (12) has a swash plate mechanism (43).

8. Aircraft (100) according to one of the preceding claims,
wherein the propulsion unit (10) has an internal combustion engine (45) that is arranged at least partially within the fuselage unit (20).

9. Aircraft (100) according to one of the preceding claims, comprising:
a casing unit (70) that has an at least partially cylindrical shape that is arranged around the first rotor (11).

10. Aircraft (100) according to Claim 9,
wherein the casing unit (70) is attached to the fuselage unit (20) by means of a truss structure (80).

11. Aircraft (100) according to one of the preceding claims,
wherein the fuselage unit (20) has a radome (26) that is releasably attached to the second end (22) of the fuselage unit (20).

## Revendications

1. Aéronef (100), présentant :
une unité de propulsion (10) dotée d'un premier rotor (11) servant à fournir une force propulsive sur l'aéronef (100) ;
une unité de fuselage, laquelle s'étend le long d'un axe de rotation (30) du premier rotor (11) et présente une forme à symétrie de révolution par rapport à l'axe de rotation (30) du premier rotor (11) ; et
un train d'atterrissage (90), lequel est monté de manière mobile sur l'unité de fuselage (20) et est configuré pour supporter l'aéronef (100) lors de l'atterrissage sur la surface terrestre (60), le train d'atterrissage (90) présentant au moins trois supports d'atterrissage ;
l'unité de fuselage (20) présentant, à une première extrémité (21), une suspension (40) par le biais de laquelle l'unité de fuselage (20) est accouplée au premier rotor (11) de telle sorte que l'unité de fuselage (20) soit espacée du premier rotor (11) le long de l'axe de rotation (30) ;
une unité de détection (50) servant à la détection d'une information d'environnement étant prévue dans la région d'une deuxième extrémité (22) de l'unité de fuselage (20) ;
l'unité de propulsion (10) étant configurée pour maintenir l'aéronef (100) dans un état de vol stationnaire, de sorte qu'une position relative de l'aéronef (100) par rapport à un point de référence (61) sur la surface terrestre (60) demeure inchangée ;
les supports d'atterrissage étant configurés pour être escamotés en direction du premier rotor ; et
une région de réception présentant une réception non perturbée de signaux provenant de l'environnement pouvant être fournie à l'unité de détection (50) lorsque le train d'atterrissage (90) est escamoté, la région de réception présentant une réception non perturbée étant limitée par un cône d'ouverture présentant un angle d'ouverture spatial d'au moins 260 degrés.

2. Aéronef (100) selon la revendication 1,
un centre de gravité (101) de l'aéronef (100) se situant sensiblement sur l'axe de rotation (30) du premier rotor (11).

3. Aéronef (100) selon l'une des revendications précédentes,
l'unité de détection (50) étant configurée pour recevoir un signal optique (51) ou un signal électromagnétique (51).

4. Aéronef (100) selon l'une des revendications précédentes,
la première extrémité (21) de l'unité de fuselage (20) constituant l'extrémité de l'unité de fuselage (20) opposée à la surface terrestre (60) dans l'état de vol stationnaire (110) ; et
la deuxième extrémité (22) de l'unité de fuselage (20) constituant l'extrémité de l'unité de fuselage (20) tournée vers la surface terrestre (60) dans l'état de vol stationnaire (110).

5. Aéronef (100) selon l'une des revendications précédentes,
la suspension (40) servant à l'accouplement de la première extrémité (21) de l'unité de fuselage (20) au premier rotor (11) présentant un mécanisme de nutation (41, 42).

6. Aéronef (100) selon l'une des revendications précédentes, présentant :
un deuxième rotor (12), lequel est disposé de manière coaxiale par rapport au premier rotor (11) ;
le deuxième rotor (12) étant accouplé à l'unité de fuselage (20) par le biais de la suspension (40), de telle sorte que l'unité de fuselage (20) soit espacée du deuxième rotor (12) le long de l'axe de rotation (30) ; et
un sens de rotation (13) du premier rotor (11) étant opposé à un sens de rotation (14) du deuxième rotor (12).

7. Aéronef (100) selon l'une des revendications précédentes,
la suspension (40) servant à l'accouplement de la première extrémité (21) de l'unité de fuselage (20) au deuxième rotor (12) présentant un mécanisme de nutation (43) .

8. Aéronef (100) selon l'une des revendications précédentes,
l'unité de propulsion (10) présentant un moteur à combustion interne (45), lequel est disposé au moins partiellement à l'intérieur de l'unité de fuselage (20).

9. Aéronef (100) selon l'une des revendications précédentes, présentant :
une unité d'enveloppe (70), laquelle présente au moins partiellement une forme cylindrique qui est disposée autour du premier rotor (11).

10. Aéronef (100) selon la revendication 9,
l'unité d'enveloppe (70) étant fixée à l'unité de fuselage (20) par le biais d'une structure en treillis (80).

11. Aéronef (100) selon l'une des revendications précédentes,
l'unité de fuselage (20) présentant un radôme (26), lequel est fixé de manière amovible à la deuxième extrémité (22) de l'unité de fuselage (20).
